Europäisches Patentamt

European Patent Office

Office européen des brevets

(11) Veröffentlichungsnummer: **0 098 890**

**A1**

## (12) EUROPÄISCHE PATENTANMELDUNG

(21) Anmeldenummer: **82106221.3**

(22) Anmeldetag: **12.07.82**

(51) Int. Cl.³: **H 02 G 11/02**

(43) Veröffentlichungstag der Anmeldung:
**25.01.84** Patentblatt **84/4**

(84) Benannte Vertragsstaaten:
**AT CH FR LI NL SE**

(71) Anmelder: **DESCO GMBH & CO**

**D-7516 Karlsbad 2(DE)**

(72) Erfinder: **Schaller, Albert
Rilkeweg 1
D-7573 Sinzheim(DE)**

(72) Erfinder: **Steiner, Dieter
Mohrengasse 3
D-7501 Marxzell 1(DE)**

(72) Erfinder: **Vetter, Werner
Peterswiesenweg 5
D-7130 Mühlacker 7(DE)**

(74) Vertreter: **Zinngrebe, Horst, Dr.rer.nat.
Patentanwälte Dipl.-Ing. G. Schliebs Dr.rer.nat. Horst
Zinngrebe Claudiusweg 17 A
D-6100 Darmstadt(DE)**

(54) Selbstaufrollende Einbau-Kabeltrommel.

(57) Eine selbstaufrollende Einbau-Kabeltrommel besteht aus einer einteiligen Spule, welche in der Nabe ein axial offenes Federgehäuse sowie ein Zugentlastungslabyrinth für das Kabel und eine Lagerhülse aufweist. Eine Grundplatte besitzt einen in die Lagerhülse passenden Lagerdorn für die Spule, an welchem eine das Federgehäuse nach außen wenigstens teilweise abschließende Stirnplatte drehbar oder alternativ drehfest gesichert werden kann. Ferner trägt die Grundplatte eine Rastklinke mit querelastischem Hebelarm, welche über einen großen Winkelbereich sperrungslos zwischen Anschlagnasen auf der Grundplatte durch Rastzähne eines Rastzahnkranzes auf der Außenseite der Spule verschwenkt werden kann. Die Kabeltrommel ist universell in verschiedenartige Elektrogeräte einbaubar, ohne daß deren Besonderheiten Anpassungen an der Kabeltrommel erforderten.

FIG.1

- 1 -

BESCHREIBUNG

Die Erfindung betrifft eine selbstaufrollende Kabeltrommel mit einer Spule, an deren Nabe axial hintereinander ein Federgehäuse für eine zwischen Spule und einem Lagerdorn wirkende Aufrollfeder, eine Befestigungsvorrichtung zum Verankern des inneren Endes eines elektrischen Kabels, sowie von federnden Schleifern kontaktierte, konzentrische Leiterringe angeordnet sind, sowie mit einer Grundplatte, die den Lagerdorn und ein Blockierelement trägt, welches im Zusammenwirken mit Blockier-Gegenelementen an der Spule ein unbeabsichtigtes Aufrollen einer von der Spule abgezogenen Kabellänge verhindert.

Die aus der DE-AS 1 574 391 bekannte Kabeltrommel hat den Nachteil, daß sie zum Einbau nur in das dort dargestellte Gerät (Kaffeemühle) geeignet ist. Die Bevorratung und Herstellung von Kabeltrommeln nur für einen Gerätetyp ist mit hohen Kosten belastet.

Die aus der DE-AS 2 756 023 bekannte Kabelaufrollvorrichtung hat sich zwar zum Ziel gesetzt, den konstruktiven Aufbau zu vereinfachen und das Zusammenfügen der einzelnen Bauteile zu erleichtern, jedoch sind die Einzelteile wegen der komplizierten Formgebung teuer in der Herstellung und nur für bestimmte Gerätetypen verwendbar.

Der Erfindung liegt die Aufgabe zugrunde, eine Kabeltrommel als Einbau-Modul zu schaffen, welches entweder direkt oder über eine Montageplatte oder nach

- 2 -

Einbau in ein die Kabeltrommel umschließendes Gehäuse
in einer unbeschränkten Vielzahl von Gerätetypen,
insbesondere von Klein-Elektrogeräten ohne zusätzliche Anpassungsarbeiten verwendet werden kann.

Bei der eingangs genannten Kabeltrommel ist dazu
nach der Erfindung vorgesehen, daß die Befestigungsvorrichtung und das in axialer Richtung offene Federgehäuse aus der einteiligen Spule geformt sind, das
freie Ende des Lagerdorns zur Aufnahme einer das
Federgehäuse wenigstens teilweise abdeckenden Stirnplatte vorbereitet und die Schleifer an der geräteunabhängig ausgebildeten Grundplatte angeordnet sind.
Beim Einbau der erfindungsgemäßen Kabeltrommel in
ein Gerät sind keine geräteseitigen Lagerelemente
mehr erforderlich, es genügen geräteseitige Fixpunkte,
an denen die erfindungsgemäße Kabeltrommel mit der
Grundplatte angeschraubt, angeklemmt oder in sonstiger
Weise drehfest befestigt werden kann. Spule und Grundplatte lassen sich mit relativ preiswerten Werkzeugen
kostengünstig aus Kunststoff herstellen und problemlos zusammensetzen.

Die Erfindung gestattet zahlreiche wertvolle und
ideenreiche Weiterbildungen, deren Merkmale in den
Unteransprüchen angedeutet sind.

Die Erfindung wird nachstehend anhand eines in den
beigefügten Zeichnungen dargestellten Ausführungsbeispiels im einzelnen erläutert. Es zeigen:

Fig. 1     eine Rückansicht einer mit den Merkmalen
           der Erfindung ausgestatteten Kabeltrommel, wobei aus der Grundplatte ein Ausschnitt
zur Verdeutlichung des Schwenkhebels gelassen ist;

Fig. 2     die Ansicht eines Querschnitts längs der
           Linie II-II aus Fig. 1;

Fig. 3     eine Vorderansicht der Kabeltrommel aus

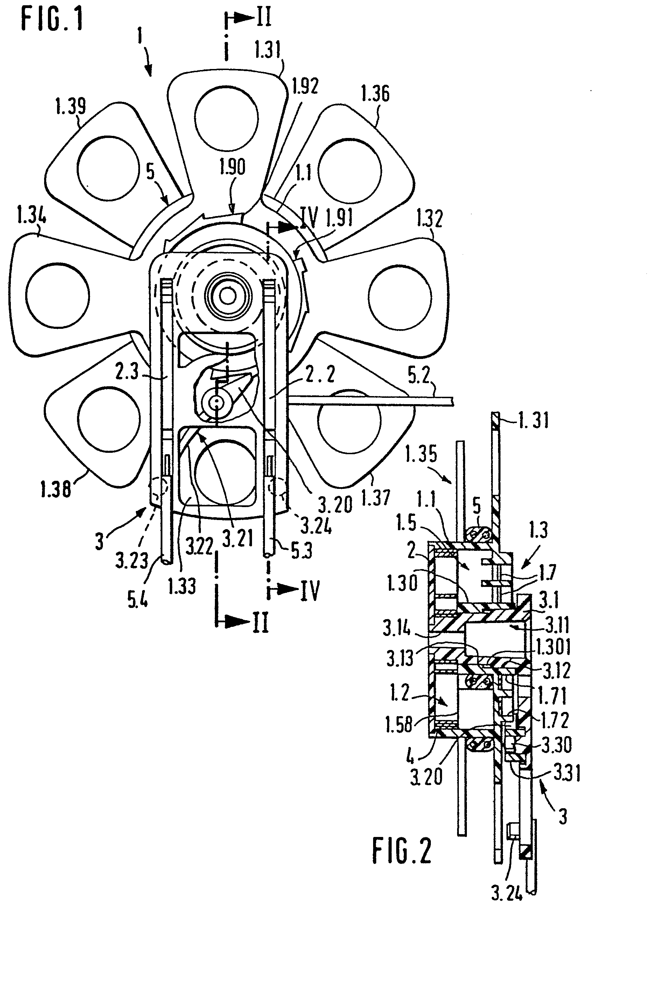

           Fig. 1, wobei die Stirnplatte im mittleren Bereich aufgeschnitten ist;

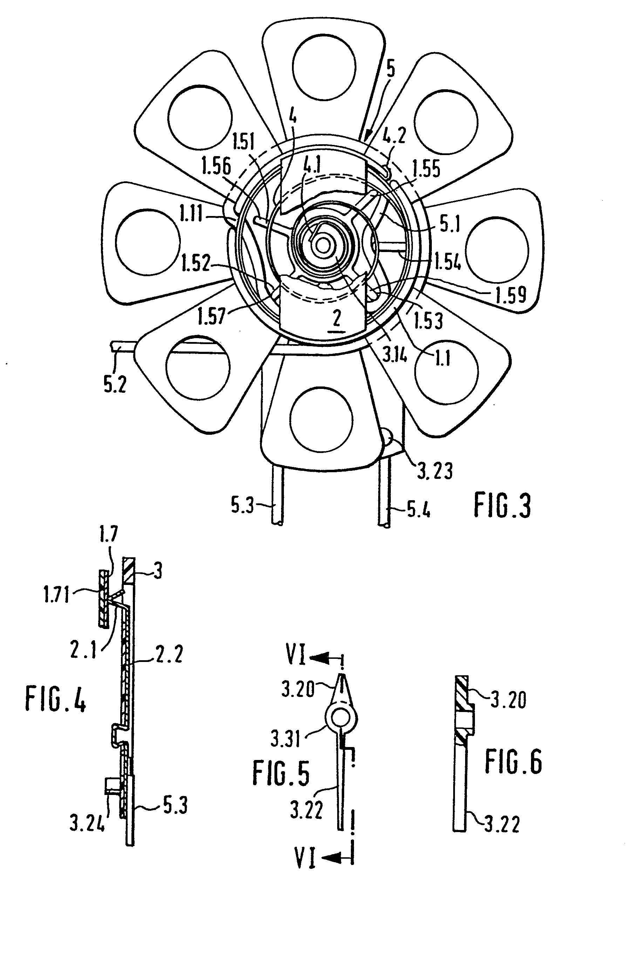

Fig. 4     die Ansicht eines Schnitts längs der
           Linie IV-IV aus Fig. 1 im Ausschnitt;

Fig. 5     eine Draufsicht auf den Schwenkhebel in
           unbelastetem Zustand; und

Fig. 6     die Ansicht eines Schnittes durch den
           Schwenkhebel gemäß VI-VI aus Fig. 5.

Die Kabeltrommel besteht aus einer Spule 1, einer
Grundplatte 3 und einem Schwenkhebel 3.21, die aus
Polystyrol oder einem anderen mechanisch festen Kunststoff gespritzt sein können.

Die Spule 1 besitzt eine Spulennabe 1.1, um deren Umfang mit gleichmäßigem Abstand mehrere Flügel 1.31,
1.32, 1.33 und 1.34 angeformt sind. Diese Flügel setzen sich bis zu einer an der Achse ausgebildeten Lagerhülse 1.30 als im wesentlichen durchgehender Spulenflansch 1.3 fort.

Der gegenüberliegende Spulenflansch 1.35 ist nur außerhalb der Nabe 1.1 in Form von weiteren Flügeln 1.36, 1.37, 1.38 und 1.39 ausgebildet, welche bei Ansicht der Kabeltrommel gemäß Figuren 1 und 3 jeweils auf Lücke zwischen benachbarten Flügeln 1.31 - 1.34 des Spulenflansches 1.3 angeordnet sind.

Die Nabe 1.1 der Spule 1 besteht aus einem an den Spulenflansch 1.3 angeformten koaxialen Zylindermantel, welcher nach der dem Spulenflansch 1.3 gegenüberliegenden Seite offen ist. Die axiale Länge des von der Nabe 1.1 umschlossenen Zylinders wird durch die geringere axiale Länge der Lagerhülse 1.30 in zwei Abschnitte unterteilt: An den Spulenflansch 1.3 axial anschließend befindet sich zwischen Lagerhülse 1.30 und Nabenwand 1.1 eine im Ganzen mit 1.5 bezeichnete Befestigungsvorrichtung für das auf die Kabeltrommel aufzuwickelnde Kabel 5; axial an das Ende der Lagerhülse 1.30 anschließend befindet sich ein rudimentäres, weil axial offenes und außen von einem Abschnitt der Nabenwand 1.1 umschlossenes Federgehäuse 1.2 für die Aufrollfeder 4.

Der Spulenflansch 1.3 weist auf seiner dem Federgehäuse 1.2 abgewandten Außenseite im dargestellten Ausführungsbeispiel zwei konzentrische Ringnuten auf, welche die Lagerhülse 1.30 umgehen und zur Aufnahme von mit den Kabelseelen zu verbindenden Leiterringen 1.7 vorgesehen sind.

Die soweit beschriebene, einteilige Spule 1 läßt sich, wie man sieht, spritztechnisch besonders leicht und kostengünstig mit nur zwei Werkzeugen herstellen.

Die Grundplatte 3 hat im wesentlichen rechtwinkligen Umriß und ist an einem oberen Abschnitt zu einem Lagerdorn 3.1 ausgeformt. Der Lagerdorn 3.1 erstreckt sich in einem ersten Abschnitt 3.12 sowie mit einem weiteren radial einwärts abgesetzten Abschnitt 3.13 in die Lagerhülse 1.30, welche den Lagerdornabschnitten 3.12 und 3.13 entsprechende innere Lagerflächen aufweist, welche mit Spiel 1.301 gegenüber der Stufe zwischen den Lagerdornabschnitten 3.12 und 3.13 abgesetzt sind. Ferner ist die Länge von der Rückseite der Grundplatte 3 bis zum entfernten Ende des Lagerdornabschnittes 3.13 geringfügig größer als die Länge der Lagerhülse 1.30, so daß die Lagerhülse 1.30 und mit ihr die Spule 1 auf dem Lagerdorn 3.1 axiales Spiel besitzt.

Der Lagerdorn 3.1 besitzt einen radial verjüngten dritten Abschnitt 3.14 am von der Grundplatte entfernten Ende, welcher sich durch das Federgehäuse 1.3 erstreckt und im wesentlichen koplanar mit der Nabenwand 1.1 endet. Am äußeren Ende trägt der dritte Lagerdornabschnitt 3.14 einen kleinen Falz, in welchen das zentrale Loch einer Stirnplatte 2 paßt.

Der Lagerdorn 3.1 besitzt eine abgestufte Durchgangsbohrung 3.11, auf die noch eingegangen wird.

Wie insbesondere Fig. 4 zeigt, sind auf der Grundplatte 3 Leiterstreifen aufgeklemmt, welche am vorderen Abschnitt zu je einem Schleifer 2.1 für je einen zugeordneten Leiterring 1.7 ausgebildet sind. Am rückwärtigen Ende jedes Leiterstreifens 2.2, 2.3 ist je eine elektrische Anschlußleitung 5.3, 5.4 angelötet, wie besonders Fig. 1 deutlich zeigt.

Die Grundplatte 3 weist ferner mit Abstand zu einem auf der Außenseite des Spulenflansches 1.3 ausgebildeten Rastzahnkranz 1.90 einen Lagerzapfen 3.30 auf, auf dem ein Schwenkhebel 3.21 mit einer Buchse 3.31 schwenkbar sitzt. Schließlich stehen aus der Grundplatte 3 an deren unteren, äußeren Bereichen je eine Anschlagnase 3.23, 3.24 in der gleichen Richtung wie der Zapfen 3.20 vor.

Der Schwenkhebel 3.21 trägt an seinem vorderen, kürzeren Arm eine Rastklinke 3.20 zum Eingriff hinter die Zähne des Rastzahnkranzes 1.90 an der Spule 1. Der andere, der Rastklinke 3.20 gegenüberliegende Schwenkhebelarm 3.22 ist als querelastisch, also quer zu seiner Längserstreckung elastisch verbiegbarer Arm ausgeführt, der bei Verschwenken des Schwenkhebels 3.21 um den Zapfen 3.20 den Raum zwischen den Anschlagnasen 3.23 und 3.24 überstreicht. Die Rastnasen 3.23 und 3.24 begrenzen dadurch den Schwenkbereich des Schwenkhebels 3.21, der, wie insbesondere aus Fig. 1 erkennbar ist, nahezu 90° beträgt.

Für die Spule 1 bleibt noch die erfindungsgemäße Befestigungsvorrichtung 1.5 zu erläutern: Sie besteht im wesentlichen aus mehreren, aus der Innenfläche des Spulenflansches 1.3 sich in axialer Richtung heraus erhebenden Rippen oder Wänden 1.51 - 1.55, deren Höhe wenigstens gleich der Breite des Kabels 5 ist und bis zum Ende der Lagerhülse 1.30 reicht. Die einzelnen Rippen 1.51 - 1.55 gehen abwechselnd radial innen in die Wand der Lagerhülse 1.30 und radial außen in die Wand der Nabe 1.1 über und lassen jeweils zu der Nabenwand 1.1 bzw. der Lagerhülse 1.30 einen der Breite des Kabels 5 entsprechenden Abstand, wie das besonders deutlich aus Fig. 3 zu erkennen ist. Auf diese Weise läßt sich das innere Ende 5.1 des Kabels 5 schlangenlinienförmig durch das durch die Rippen 1.51 - 1.55 gebildete Labyrinth verlegen. Es ergibt sich auf diese Weise eine derartige Zugentlastung für das innere Kabelende 5.1, daß auf eine Verschraubung des inneren Kabelendes 5.1 an der Spule bzw. dem Spulenflansch 1.3 verzichtet werden kann.

Die nach axial außen weisenden freien Rippenkanten 1.56 - 1.59 liegen im wesentlichen in einer gemeinsamen Ebene mit dem Ende der Lagerhülse 1.30, so daß eine in das Federgehäuse 1.2 eingesetzte Aufrollfeder 4 in den freien Rippenkanten 1.56 - 1.59 eine innere Anlagefläche findet und am Ausweichen in das Innere der Nabe 1.1 gehindert ist.

Beim Zusammenbau wird zunächst das innere Ende 5.1 des Kabels an einem geeigneten Durchbruch des Spulenflanschs 1.30 mit den einzelnen Leiterseelen zugeordneten Leiterringen 1.7 verlötet. Das innere Leiterende 5.1 wird dann durch das Zugentlastungslabyrinth der Befestigungsvorrichtung 1.5 gelegt und durch eine Öffnung 1.11 in der Nabenwand 1.1 nach außen um die Nabe 1.1 herum in mehreren Lagen zwischen die Flügel 1.31 - 1.34 einerseits und 1.36 - 1.39 andererseits gelegt, bis eine Kabellänge 5.2 zum Abzug nach außen verbleibt.

Sodann wird der Lagerdorn 3.1 in die Lagerhülse 1.30 eingesetzt und die Stirnplatte 2, die gemäß Fig. 3 das Federgehäuse 1.2 in axialer Richtung teilweise überdeckt, mittels eines in die Bohrung im dritten Lagerdornabschnitt 3.14 eingesetzten, nicht dargestellten Befestigungselements auf dem Lagerdorn 3.1 drehbar gesichert. Vor dem Einsetzen des Lagerdorns 3.1 der Grundplatte 3 wurde auf dem Zapfen 3.20 der Grundplatte 3 der Schwenkhebel 3.21 aufgesetzt.

Die erfindungsgemäße Kabeltrommel ist jetzt montagefertig. Wird an der Kabellänge 5.2 gezogen, überstreicht die Rastklinke 3.20 federnd die Zähne des Rastzahnkranzes 1.90. Um ein unbeabsichtigtes Aufwickeln der Kabellänge 5.2 zu vermeiden, kann die Rastklinke 3.20, wie in Fig. 1 dargestellt, den jeweils nächsten Zahn des Rastzahnkranzes 1.90 blockierend hintergreifen.

Gemäß Fig. 1 weist der Rastzahnkranz 1.90 wenigstens einen Lückenabschnitt 1.91 auf, der soweit nach radial innen ausgenommen ist, daß die Rastklinke 3.20 bei Betrachtung der Fig. 1 in Gegenrichtung des Uhrzeigers von dem jeweils den Lückenabschnitt 1.31 begrenzenden letzten Zahn 1.92 bei Drehung der Spule in Uhrzeigerrichtung mitgenommen wird. Das Aufwickeln der Kabellänge 5.2 geschieht dann unter der Wirkung der Aufrollfeder 4, deren inneres Ende 4.1 im Fleich des äußeren, dritten Lagerdornabschnittes 3.14 und deren äußeres Ende 4.2 in einem Schlitz in der Nabenwand 1.1 verankert sind (Fig. 3).

Wird eine Kabellänge 5.2 wieder erneut von der Kabeltrommel abgezogen, nimmt die Vorderkante der Begrenzung des Lückenabschnittes 1.91 die Rastklinke 3.20 mit und verschwenkt diese so, daß der federnde Hebelarm 3.22 gegen die Anschlagnase 3.23 der Befestigungsplatte 3 anliegt.

Die erfindungsgemäße Kabeltrommel ist universell in jedem Elektrogerät einbaubar, ohne daß die jeweils andere Bauweise des Elektrogeräts eine Anpassung oder Modifikation der erfindungsgemäßen Kabeltrommel erfordert. So können geräteseitig an vorgegebenen Fixpunkten Klemmfedern so angeordnet sein, daß die Längsseiten der Grundplatte 3 in diese Haltefedern eingedrückt werden können. Die erfindungsgemäße Kabeltrommel ist dann fertig eingebaut, wobei es sich für solche Anwendungsfälle versteht, daß der Lagerdorn 3.1 keine Axialbohrung 3.11 aufweisen muß. Jedoch beeinträchtigt ihr eventuelles Vorhandensein weder den Einbau noch die Funktion der Trommel.

In anderen Anwendungsfällen kann eine besondere Montageplatte für die Grundplatte 3 geschaffen sein, welche einen in den weiten Teil der Lagerdornbohrung 3.11 passenden Haltezapfen sowie seitliche Nasen zur drehfesten Halterung der Grundplatte 3 besitzt. Ein derartiger Haltezapfen kann eine Gewindebohrung für das die Stirnplatte 2 sichernde Befestigungselement aufweisen, mit welchem die gesamte Kabeltrommel an der Montageplatte angeschraubt werden kann. Als weitere Variante kann es wünschenswert sein, die Kabeltrommel in einem sie umschließenden Gehäuse unterzubringen, welches in ein Elektrogerät in geeigneter Weise eingebaut werden kann. In den genannten Anwendungsfällen ist es also lediglich erforder-

- 10 -

lich, die Grundplatte 3 in dem Gerät drehfest zu
verankern, Lagerprobleme für die Spule 1 können
nicht auftreten.

Die Ansprüche, die Zusammenfassung sowie die Zeichnungen stellen selbständige Offenbarungsmittel erfindungsgemäßer Merkmale dar, soweit diese sich aus
der vorstehenden Beschreibung nicht oder nicht eindeutig ergeben sollten.

# Dipl.-Ing. Günter Schliebs
# Dr. rer. nat. Horst Zinngrebe

**0098890**

# Patentanwälte
# in Darmstadt

European Patent Attorneys
Mandataires en brevet européens

Schliebs + Zinngrebe, Claudiusweg 17A, D-6100 Darmstadt

An das
Europäische Patentamt
Erhardtstraße 27

**8000 München 2**

– / –

Telefon: (06151) 46753
Telex: 0419499
Telegramm: inventron

Claudiusweg 17A
D-6100 Darmstadt

| Aktenzeichen | Unser Ref. D 501-1 | Datum 8. Juli 1982 |
|---|---|---|
| Anmelder/Inhaber: | DESCO GMBH & CO | |
| Auf den Bescheid vom: | 7516 Karlsbad 2 | |

**Neuanmeldung:** Selbstaufrollende Einbau-Kabeltrommel

## ANSPRÜCHE

1. Selbstaufrollende Kabeltrommel mit einer Spule (1), an deren Nabe (1.1) axial hintereinander ein Federgehäuse (1.2) für eine zwischen Spule und einem Lagerdorn (3.1) wirkende Aufrollfeder (4), eine Befestigungsvorrichtung (1.5) zum Verankern des inneren Endes (5.1) eines elektrischen Kabels (5), sowie von federnden Schleifern (2.1) kontaktierte, konzentrische Leiterringe (1.7) angeordnet sind, sowie mit einer Grundplatte (3), die den Lagerdorn (3.1) sowie ein Blockierelement (3.2) trägt, welches im Zusammenwirken mit Blockier-Gegenelementen (1.9) an der Spule ein unbeabsichtigtes Aufrollen einer von der Spule abgezogenen Kabellänge (5.2) verhindert, dadurch gekennzeichnet, daß die Befestigungsvorrichtung (1.5) und das in axialer Richtung offene Federgehäuse (1.2) aus der einteiligen Spule (1) geformt sind, das freie Ende des Lagerdorns (3.1) zur Aufnahme in das Federgehäuse (1.2) wenigstens teilweise abdeckenden Stirnplatte (2) vorbereitet und die Schleifer (2.1) an der geräteunabhängig ausgebildeten Grundplatte (3) angeordnet sind.

2. Kabeltrommel nach Anspruch 1, dadurch gekennzeichnet, daß die Befestigungsvorrichtung (1.5) als Zugentlastung für das innere Kabelende (5.1) mehrere sich radial erstreckende, radial versetzte, über den Nabenumfang verteilte, axial erhabene Rippen (1.51 - 1.55) aufweist.

3. Kabeltrommel nach Anspruch 1 oder 2, dadurch gekennzeichnet, daß die Befestigungsvorrichtung die innere, stirnseitige Anlage für die Aufrollfeder (4) ist.

4. Kabeltrommel nach einem der vorstehenden Ansprüche, dadurch gekennzeichnet, daß die freien Kanten (1.56, 1.57) der Rippen (1.51 - 1.55) Anlagelinien für die Aufrollfeder (4) sind.

5. Kabeltrommel nach einem der vorstehenden Ansprüche, dadurch gekennzeichnet, daß der Spulenflansch (1.3) an der dem Federgehäuse (1.2) gegenüberliegenden Seite die Leiterringe (1.7) trägt.

6. Kabeltrommel nach einem der vorstehenden Ansprüche, dadurch gekennzeichnet, daß der Spulenflansch (1.3) mit einer Lagerhülse (1.31) für den Lagerdorn (3.1) versehen ist, welche den von der Befestigungsvorrichtung (1.5) eingenommenen Raum der Nabe (1.1) durchsetzt und vor dem Federgehäuse (1.2) endet.

7. Kabeltrommel nach Anspruch 6, dadurch gekennzeichnet, daß aus der Lagerhülse (1.31) jede jeweils übernächste Rippe (1.53, 1.55) ausgeformt ist.

8. Kabeltrommel nach einem der vorstehenden Ansprüche, dadurch gekennzeichnet, daß die Rippen (1.51 - 1.55) eine Höhe haben, die wenigstens gleich der Dicke des Kabels (5) ist.

9. Kabeltrommel nach einem der vorstehenden Ansprüche, dadurch gekennzeichnet, daß der Lagerdorn (3.1) von der Grundplatte (3) her aufgebohrt ist.

10. Kabeltrommel nach Anspruch 9, dadurch gekennzeichnet, daß die Bohrung des Lagerdorns kantigen Querschnitt hat.

11. Kabeltrommel nach Anspruch 9 oder 10, dadurch gekennzeichnet, daß die Bohrung (3.11) eine abgestufte Durchgangsbohrung ist.

12. Kabeltrommel nach einem der vorstehenden Ansprüche, dadurch gekennzeichnet, daß der Spulenflansch (1.3) auf seiner Außenseite mit einem wenigstens einen Lückenabschnitt (1.91) aufweisenden Rastzahnkranz (1.90) als Blockier-Gegenelement (1.9) versehen ist.

13. Kabeltrommel nach einem der vorstehenden Ansprüche, dadurch gekennzeichnet, daß die Grundplatte (3) eine verschwenkbare Rastklinke (3.20) als Blockierelement (3.2) trägt, die auf den Rastkranz (1.90) elastisch vorgespannt ist.

14. Kabeltrommel nach Anspruch 13, dadurch gekennzeichnet, daß die Rastklinke (3.20) ein Arm eines an der Grundplatte (3) gelagerten, einteiligen Schwenkhebels (3.21) ist, dessen anderer Arm (3.22) querelastisch ist und zwischen auf der Grundplatte (3) derart angeordneten Nasen verschwenkbar ist, daß die Rastklinke auf den Rastzahnkranz elastisch aufdrückt.

15. Kabeltrommel nach einem der vorstehenden Ansprüche, dadurch gekennzeichnet, daß die Grundplatte (3) auf ein Geräteteil an Fixpunkten aufsteckbar ist.

16. Kabeltrommel nach Anspruch 15, dadurch gekennzeichnet, daß das Geräteteil der Boden eines in ein Gerät einbaubaren Trommelgehäuses ist.

17. Kabeltrommel nach einem der vorstehenden Ansprüche, dadurch gekennzeichnet, daß der Spulenflansch (1.3) außerhalb der Spulennabe (1.1) umfangmäßig versetzte Flügel aufweist, deren Lücken gegen den gegenüberliegenden Spulenflansch (1.35) bildende weitere Flügel (1.36 - 1.39) aus der Spule (1) ausgeformt sind.

FIG.1

FIG.2

FIG.3

FIG.4

FIG.5

FIG.6

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 834 645  (STARTING INDUSTRY CO., LTD.) <br> * Spalte 1, Zeile 57 - Spalte 3, Zeile 63; Figuren 1-6 * | 1,5 | H 02 G   11/02 |
| A,D | DE-A-2 756 023  (SIEMENS) <br> * Seite  9, Zeile 12 - Seite 10, Zeile 21; Figuren 1,2 * | 1 | |
| A,D | DE-A-1 574 391  (STREICHER) <br> * Seite 8, letzter Absatz - Seite 14, Abschnitt 1; Figur 1 * | 1,5 | |
| A | US-A-3 813 501  (VACUUM CLEANER) <br> * Spalte 1, Zeile 58 - Spalte 4, Zeile 20; Figuren 1-5 * | 1,2,5 | |
| A | US-A-1 591 901  (WATTS) <br> * Seite 1, Zeilen 34-109; Figuren 1-3 * | 1,12 | |

RECHERCHIERTE SACHGEBIETE (Int. Cl. ³)

H 02 G   11/00
B 65 H   75/00
H 04 M    1/00
A 47 L    9/00
F 21 V   21/00

Der vorliegende Recherchenbericht wurde für alle Patentansprüche erstellt.

| Recherchenort <br> DEN HAAG | Abschlußdatum der Recherche <br> 17-03-1983 | Prüfer <br> LOMMEL A. |
|---|---|---|